# EUROPÄISCHE PATENTSCHRIFT

(11) **EP 2 256 372 B1**
(45) Veröffentlichungstag und Bekanntmachung des Hinweises auf die Patenterteilung: **14.11.2012**
(21) Anmeldenummer: 10005041.8
(22) Anmeldetag: 12.05.2010
(51) Int. Cl.: F16H 25/24, F16H 25/22, B64C 13/28

(54) **Spindeltrieb**
Spindle drive
Entraînement à broche

(30) Priorität: 25.05.2009 DE 102009022404
(43) Veröffentlichungstag der Anmeldung: 01.12.2010
(73) Patentinhaber: Liebherr-Aerospace Lindenberg GmbH, 88161 Lindenberg/Allgäu (DE)
(72) Erfinder: Bassett, Frederick, 88175 Scheidegg (DE)
(74) Vertreter: Herrmann, Uwe

(56) Entgegenhaltungen:
- EP-A1- 1 398 542
- EP-A2- 1 283 384
- WO-A2-2009/117750
- FR-A1- 2 839 352

## Beschreibung

Die vorliegende Erfindung betrifft einen Spindeltrieb, insbesondere zur Bewegung einer Komponente, wie beispielsweise einer Klappe eines Flugzeuges.

Spindeltriebe sind in unterschiedlichen Ausführungen bekannt. Sie bewirken eine translatorische Bewegung entweder der Spindel oder der mit dieser kämmenden Mutter, um eine lineare Bewegung der Komponente zu bewirken.

Dokument FR 2 839 352 A1 offenbart einen Spindeltrieb gemäß dem Oberbegriff des Anspruchs 1. Sie offenbart eine Überwachungsvorrichtung zur Überwachung des Abstandes zwischen Tragmutter und Fangmutter mit einem LVDT Sensor.

Die am 01.10.2009 veröffentlichte Anmeldung W02009/117750 A2 beansprucht die Priorität vom 27.03.2008 und gilt daher gemäß Artikel 54 (3) EPÜ als Stand der Technik.

Sie beschreibt einen Spindeltrieb mit einer Überwachungsvorrichtung, die einen, bei einer Änderung des Abstands zwischen der Fangmutter und der Tragmutter in zumindest einer Richtung parallel zur Längsachse der Spindel verschiebbaren Schieber aufweist, und einen, in einer schräg oder orthogonal zur Längsachse der Spindel angeordneten Schlittenführungsbahn, verschiebbaren Schlitten aufweist. Die Überwachungsvorrichtung kann eine kontinuierlich messende Positionserkennungseinrichtung aufweisen.

Insbesondere bei der Steuerung von Komponenten eines Flugzeuges ist es wichtig, dass sichergestellt ist, dass selbst bei einem Fehler eines Teils des Spindeltriebes die Steuerbarkeit des Flugzeuges gewährleistet bleibt und dass der fehlerhafte Aktuator vollständig oder zumindest teilweise während der verbleibenden Flugdauer funktionsfähig bleibt.

Der vorliegenden Erfindung liegt die Aufgabe zugrunde, einen Spindeltrieb bereitzustellen, der diese Aufgabe erfüllt und der im Fehlerfall eines Lastpfades eine Betätigung über den anderen Lastpfad ermöglicht und mittels dessen angezeigt wird, dass ein solcher Fehlerfall eingetreten ist.

Diese Aufgabe wird durch einen Spindeltrieb mit den Merkmalen des Anspruchs 1 gelöst.

Danach ist vorgesehen, dass der Spindeltrieb mit einem ersten Lastpfad ausgeführt ist, der eine erste Mutter umfasst, die mit einer Gewindestange kämmt, sowie mit einem zweiten Lastpfad, der eine zweite Mutter umfasst, die ebenfalls mit der Gewindestange kämmt und die derart angeordnet ist, dass sie in wenigstens einem Zustand des Spindeltriebs in axialer Richtung der Gewindestange relativ zu der ersten Mutter bewegbar ist, wobei der Spindeltrieb eine Sensoreinheit aufweist, die derart ausgeführt ist, dass sie eine Relativbewegung zwischen der ersten Mutter und der zweiten Mutter erfasst.

Kommt es zu einem Versagen der ersten Mutter oder zu einem Verschleiß des Gewindes der ersten Mutter oder der Gewindestange kann dies zu einer Relativbewegung zwischen der ersten Mutter und der zweiten Mutter führen, die von einer Sensoreinheit erfasst wird, wobei die Sensoreinheit in diesem Fall ein Signal oder dergleichen abgeben kann, die einem Nutzer den Eintritt eines Fehlerfalls anzeigt.

Die zweite Mutter kann wenigstens bereichsweise oder vollständig in dem von der ersten Mutter umgebenen Bereich angeordnet sein.

Die zweite Mutter kann in die erste Mutter integriert sein.

Die zweite Mutter kann als Ring ausgeführt sein, der auf seiner Innenseite ein Gewinde aufweist, das in seiner Ausgestaltung vorzugsweise dem Innengewinde der ersten Mutter entspricht.

Das Gewinde der zweiten Mutter ist vorzugsweise unmittelbar oder beabstandet neben dem Gewinde der ersten Mutter angeordnet.

In weiterer Ausgestaltung der Erfindung ist wenigstens Aktivierungselement, vorzugsweise ein Aktivierungsring vorgesehen, der durch die Relativbewegung beider Muttern, vorzugsweise durch die axiale Bewegung der zweiten Mutter in axialer Richtung der Spindel bewegt wird.

Dieses Aktivierungselement kann sich außerhalb des von der ersten Mutter umgebenen Bereiches befinden. Es kann derart angeordnet sein, dass es auf der von der Gewindestange abgewandten Außenseite der ersten Mutter verschieblich angeordnet ist.

In weiterer Ausgestaltung der Erfindung erstreckt sich das Aktivierungselement durch eine Ausnehmung in der ersten Mutter hindurch. Die Verbindung zu dem Aktivierungselement kann durch einen Bolzen oder dergleichen erreicht werden, der sich durch die Ausnehmung hindurch erstreckt und mit dem Aktivierungselement in Verbindung steht.

In bevorzugter Ausgestaltung der Erfindung ist die Sensoreinheit ortsfest angeordnet. Sie kann beispielsweise am Gehäuse des Spindeltriebes angeordnet sein.

Die Sensoreinheit ist derart ausgeführt, dass sie die Bewegung eines Kolbens oder dergleichen erfasst, wobei der Kolben derart angeordnet ist, dass er bei einer Relativbewegung zwischen erster Mutter und zweiter Mutter eine Bewegung erfährt.

Der Kolben ist im normalen Betriebszustand in einer Nut eines mit der zweiten Mutter in Verbindung stehenden Elementes, vorzugsweise in der Nut des genannten Aktivierungselementes bzw. des Aktivierungsrings angeordnet und wird im Fehlerfall in radialer Richtung relativ zur zweiten Mutter bewegt. Diese Kolbenbewegung wird durch die Sensoreinheit erfasst.

Die erste Mutter steht mit der zweiten Mutter vorzugsweise derart in Verbindung, dass die beiden Muttern nicht relativ zueinander verdrehbar sind. Eine solche drehfeste Verbindung kann beispielsweise durch ein oder mehrere Stifte oder dergleichen vorgesehen werden, die die beiden Muttern miteinander derart verbinden, dass die Drehbewegung der einen Mutter auf eine Drehbewegung der anderen Mutter übertragen wird.

Weiterhin kann vorgesehen sein, dass die Gewindestange einen Betriebsbereich aufweist, in dem während des üblichen Betriebes des Spindeltriebes eine Relativbewegung zwischen Gewindestange und der ersten Mutter stattfindet, und dass die zweite Mutter derart angeordnet ist, dass sie sich zumindest teilweise außerhalb des Betriebsbereiches befindet, wenn sich der Spindeltrieb in einer oder beider seiner Endpositionen befindet. Denkbar ist es, dass die zweite Mutter den Betriebsbereich in einer oder beiden Endpositionen des Spindeltriebes verläßt, d.h. sich in einem nicht belasteten Gewindebereich der Gewindestange befindet.

Weiterhin kann vorgesehen sein, dass der Spindeltrieb mit einer in ihrer Position zu verändernden Komponente, wie beispielsweise einer Klappe, einem Ruder etc. eines Luftfahrzeuges, insbesondere eines Flugzeuges in Verbindung steht.

Die vorliegende Erfindung betrifft des Weiteren ein Luftfahrzeug, insbesondere ein Flugzeug mit wenigstens einem Spindeltrieb nach einem der Ansprüche 1 bis 14.

Die Begriffe Spindeltrieb, Gewindestange und Mutter sind weit auszulegen und umfassen einen herkömmlichen Gewindespindeltrieb, bei dem eine Mutter mit dem Gewinde einer Gewindestange kämmt. Er umfaßt jedoch ebenso beliebige andere Spindeltriebe, die mit Rollen, Walzen etc. arbeiten sowie auch solche, bei denen die Rollen, Walzen etc. rezirkulieren, wie z.B. Kugelumlaufspindeltriebe oder Rollengewindespindeln.

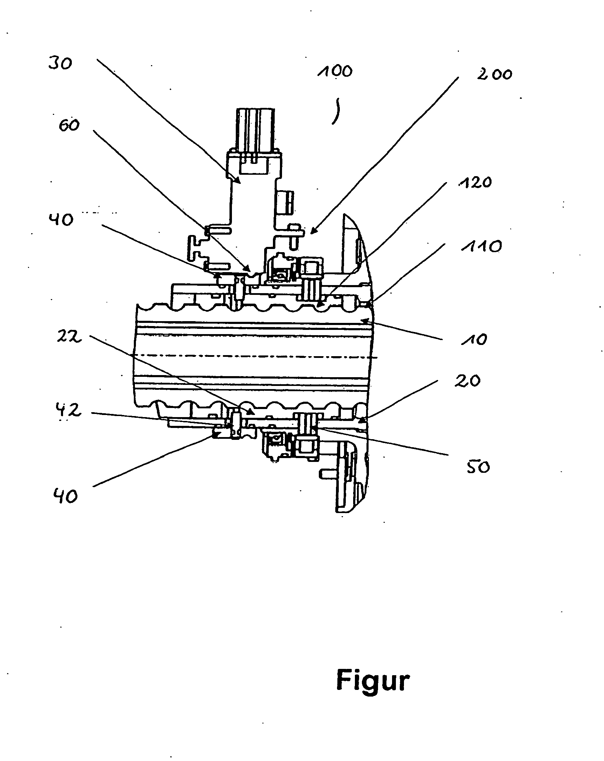

Weitere Einzelheiten und Vorteile der Erfindung werden anhand eines in der Zeichnung dargestellten Ausführungsbeispiels näher erläutert.

Die einzige Figur zeigt einen Endbereich eines Gewindetriebes gemäß der vorliegenden Erfindung. Der Gewindetrieb bildet einen linearen Aktuator.

Mit dem Bezugszeichen 30 ist eine Sensoreinheit gekennzeichnet, die einfach vorhanden ist und die außerhalb der ersten Mutter 20 und fest an einem ortsfesten Teil wie beispielsweise dem Gehäuse 200 des Spindeltriebes 100 angeordnet ist. Die Sensoreinheit umfaßt einen LVDT (Linear Variable Displacement Transducer), der durch den Kolben 60 aktiviert wird bzw. dessen Position erfasst, der in Abhängigkeit von der Relativposition von erster Mutter 20 und zweiter Mutter 22 bewegt wird.

Der Kolben 60 befindet sich in einer Nut des Aktivierungsrings 40. Der Aktivierungsring 40 bzw. dessen Bolzen 42 erstreckt sich durch eine Bohrung oder einen Ringspalt in der ersten Mutter 20, wie dies in der Figur dargestellt ist.

Der Spindeltrieb 100, der in der Figur nur in seinem einen Endbereich dargestellt ist, befindet sich zwischen der Flugzeugstruktur und der zu bewegenden Komponente, wie beispielsweise einer Klappe, einem Ruder oder dergleichen.

Die maximale Abnutzung eines linearen Aktuators gemäß der Erfindung ist auf den Betriebsbereich 110 beschränkt, in dem eine Relativbewegung zwischen Mutter 20 und Gewindestange 10 vorliegt. Wenn die zweite Mutter 22 derart angeordnet ist, dass sie in der Endposition des Spindeltriebes 100 außerhalb dieses belasteten Bereiches 110 angeordnet ist, führt dies zu einer Relativbewegung zwischen beiden Muttern 20, 22, die durch den Sensor 30 erfasst werden kann.

Da die erste Mutter 20 für jede Einheit der translatorischen Bewegung einmal rotiert, führt dies dazu, dass die erste Mutter 20 eine Vielzahl von Umdrehungen durchläuft, wenn der Spindeltrieb einen Hub ausführt und überstreicht dabei eine Vielzahl von Gewindegängen der Gewindestange 10. Daher wird sich in der ersten Mutter 20 ein größeres Maß an Abnutzung einstellen, als dies für die Gewindestange 10 gilt.

Die erste Mutter 20 bildet den ersten und die zweite Mutter 22 den zweiten Lastpfad. Erste Mutter 20 und zweite Mutter 22 sind derart ausgeführt, dass sie axial zueinander bewegbar sind. Diese axiale Bewegung ist ausreichend, um unmittelbar oder mittelbar von dem Sensor 30 erfasst zu werden. Eine freie axiale Bewegung der zweiten Mutter 22 wird jedoch durch deren Innengewinde verhindert, mit dem sie mit dem Außengewinde der Gewindestange 10 kämmt.

Die erste Mutter 20 und die zweite Mutter 22 sind geölt und laufen gemeinsam auf der Gewindestange 10. Sie sind gegenüber der Umgebungsatmosphäre abgedichtet, so keine Feuchtigkeit, Schmutz und dergleichen eindringen kann.

Kommt es zu einem Versagen der belasteten Gewindegänge der ersten Mutter 20 und/oder der Gewindestange 10 in dem Bereich unterhalb der ersten Mutter 20, kommt es zu einer axialen Relativbewegung zwischen der ersten Mutter 20 und der Gewindestange 10. Die zweite Mutter 22, die sich beispielsweise in einem Bereich 120 der Gewindespindel 10 befindet, der nicht belastet ist bzw. nicht zum Betriebsbereich der Gewindespindel 10 gehört, bleibt bei der genannten Axialverschiebung der ersten Mutter 20 stationär. Somit kommt es zu einer relativen axialen Bewegung zwischen den Muttern 20, 22 und somit auch zwischen dem Aktivierungsring 40 und der ortsfesten Sensoreinheit 30. Der Kolben 60 erfährt dadurch eine in Kolbenrichtung erfolgende axiale Bewegung weg von der Nutachse des Aktivierungsrings 40 und verläßt je nach dem Ausmaß der Relativbewegung zwischen beiden Muttern 20, 22 die in dem Aktivierungsring 40 befindliche Nut.

Diese Bewegung des Kolbens 60 wird durch die Sensoreinheit 30 erfasst.

Aufgrund des Versagens der Gewindegänge unterhalb der ersten Mutter 20 wird die Last zu den intakten Gewindegängen im Bereich der zweiten Mutter 22 übertragen und durch die Verbindungsstifte 50 zu der ersten Mutter, wodurch der zweite Lastpfad gebildet wird.

Kommt es zu einer Abnutzung der Gewindegänge der Gewindestange 10 kann dies beispielsweise erkannt werden, wenn sich der Spindeltrieb 100 an einem Ende seines Betriebsbereiches befindet. Dabei verläßt die zweite Mutter 22 den belasteten Bereich, d.h. den Betriebsbereich 110 und befindet sich in einem Bereich 120 nicht belasteter Gewindegänge der Gewindespindel 10.

Das nun auftretende Spiel zwischen den Muttern 20, 22 kann als axiale Relativbewegung der zweiten Mutter 22 erfasst werden.

Diese Relativbewegung in axialer Richtung zwischen den Muttern 20, 22 und somit zwischen dem Aktivierungsring 40 und der Sensoreinheit 30 führt - wie oben beschrieben - zu einer Bewegung des Kolbens 60, die von der Sensoreinheit 30 erfasst wird.

Kommt es zu einem übermäßigen Verschleiß der Gewindegänge der ersten Mutter 20, kann dies in jedem beliebigen Bereich der Gewindestange 10 erfasst werden. Denn der Verschleiß der Gewindegänge der ersten Mutter 20 relativ zu dem der Gewindegänge der Gewindestange 10 führt zu einer Relativbewegung der Muttern 20, 22 zueinander und somit auch zu einer Bewegung des Aktivierungsrings 40 relativ zu der Sensoreinheit 30. Dies führt wie oben ausgeführt zu einer Bewegung des Kolbens 60, die von der Sensoreinheit 30 erfasst wird.

## Patentansprüche

1. Spindeltrieb (100) mit einem ersten Lastpfad, der eine erste Mutter (20) umfasst, die mit einer Gewindestange (10) kämmt, sowie mit einem zweiten Lastpfad, der eine zweite Mutter (22) umfasst, die ebenfalls mit der Gewindestange (10) kämmt und die derart angeordnet ist, dass sie in wenigstens einem Zustand des Spindeltriebs (100) in axialer Richtung der Gewindestange (10) relativ zu der ersten Mutter (20) bewegbar ist, wobei der Spindeltrieb (100) eine Sensoreinheit (30) aufweist, die derart ausgeführt ist, dass sie eine Relativbewegung zwischen der ersten Mutter (20) und der zweiten Mutter (22) erfasst, dass die Sensoreinheit (30) derart ausgeführt ist, dass sie die Bewegung eines Kolbens (60) oder dergleichen erfasst, wobei der Kolben (60) derart angeordnet ist, dass er bei einer Relativbewegung zwischen erster Mutter (20) und zweiter Mutter (22) eine Bewegung erfährt,
**dadurch gekennzeichnet,**
**dass** der Kolben im normalen Betriebszustand in einer Nut eines mit der zweiten Mutter (22) in Verbindung stehenden Elementes angeordnet ist und im Fehlerfall in radialer Richtung relativ zur zweiten Mutter (22) bewegt wird und
**dass** die Sensoreinheit (30) einen LVDT (Linear Variable Displacement Transducer) umfasst, der durch den Kolben (60) aktiviert wird bzw. dessen Position erfasst, der in Abhängigkeit von der Relativposition von der ersten Mutter (20) und zweiter Mutter (22) bewegt wird.

2. Spindeltrieb (100) nach Anspruch 1, **dadurch gekennzeichnet, dass** die zweite Mutter (22) wenigstens bereichsweise oder vollständig in dem von der ersten Mutter (20) umgebenen Bereich angeordnet ist.

3. Spindeltrieb (100) nach Anspruch 1 oder 2, **dadurch gekennzeichnet, dass** wenigstens Aktivierungselement, vorzugsweise ein Aktivierungsring (40) vorgesehen ist, der durch die axiale Bewegung der zweiten Mutter (22) in axialer Richtung der Spindel bewegt wird.

4. Spindeltrieb (100) nach Anspruch 3, **dadurch gekennzeichnet, dass** sich das Aktivierungselement außerhalb des von der ersten Mutter (20) umgebenen Bereiches befindet.

5. Spindeltrieb (100) nach Anspruch 3 oder 4, **dadurch gekennzeichnet, dass** das Aktivierungselement derart angeordnet ist, dass es auf der von der Gewindestange (10) abgewandten Außenseite der ersten Mutter (20) verschieblich angeordnet ist.

6. Spindeltrieb (100) nach einem der Ansprüche 3 bis 5, **dadurch gekennzeichnet, dass** sich das Aktivierungselement mittels eines Bolzens (42) durch eine Ausnehmung in der ersten Mutter (20) erstreckt.

7. Spindeltrieb (100) nach einem der vorhergehenden Ansprüche, **dadurch gekennzeichnet, dass** die Sensoreinheit (30) ortsfest angeordnet ist.

8. Spindeltrieb (100) nach Anspruch 7 sowie nach einem der Ansprüche 3 bis 6, **dadurch gekennzeichnet, dass** es sich bei dem wenigstens einem Element um das Aktivierungselement handelt.

9. Spindeltrieb (100) nach einem der vorhergehenden Ansprüche, **dadurch gekennzeichnet, dass** die erste Mutter (20) mit der zweiten Mutter (22) derart in Verbindung steht, dass die beiden Muttern (20, 22) nicht relativ zueinander verdrehbar sind.

10. Spindeltrieb (100) nach Anspruch 9, **dadurch gekennzeichnet, dass** ein oder mehrere Stifte (50) oder dergleichen vorgesehen sind, die die beiden Muttern (20, 22) drehfest miteinander verbinden.

11. Spindeltrieb (100) nach einem der vorhergehenden Ansprüche, **dadurch gekennzeichnet, dass** die Gewindestange (10) einen Betriebsbereich (110) aufweist, in dem während des üblichen Betriebes des Spindeltriebes (100) eine Relativbewegung zwischen Gewindestange (10) und der ersten Mutter (20) stattfindet, und dass die zweite Mutter (22) derart angeordnet ist, dass sie sich zumindest teilweise außerhalb des Betriebsbereiches (110) befindet, wenn sich der Spindeltrieb (100) in einer seiner Endpositionen befindet.

12. Spindeltrieb (100) nach einem der vorhergehenden Ansprüche, **dadurch gekennzeichnet, dass** der Spindeltrieb (100) mit einer in ihrer Position zu verändernden Komponente, wie beispielsweise einer Klappe, einem Ruder oder dergleichen eines Luftfahrzeuges, insbesondere eines Flugzeuges in Verbindung steht.

13. Luftfahrzeug mit wenigstens einem Spindeltrieb (100) nach einem der Ansprüche 1 bis 12.

## Claims

1. A spindle drive (100) having a first load path which includes a first nut (20) which meshes with a threaded bolt (10) and a second load path which includes a second nut (22) which likewise meshes with the threaded bolt (10) and which is arranged such that it is movable relative to the first nut (20) in the axial direction of the threaded bolt (10) in at least one state of the spindle drive (100), wherein the spindle drive (100) has a sensor unit (30) which is made such that it detects a relative movement between the first (20) nut and the second nut (22), and which sensor unit (30) is made such that it detects the movement of a piston (60) or the like, with the piston (60) being arranged such that it undergoes a movement on a relative movement between the first nut (20) and the second nut (22),
**characterized in that**
the piston is arranged in the normal operating state in a groove of an element connected to the second nut (22) and is moved in the event of a defect in the radial direction relative to the second nut (22); and
the sensor unit (30) includes an LVDT (linear variable displacement transducer) which is activated by the piston (60) or detects its position, which is moved in dependence on the relative position of the first nut (20) and the second nut (22).

2. A spindle drive (100) in accordance with claim 1, **characterized in that** the _ second nut (22) is arranged at least regionally or completely in the region surrounded by the first nut (20).

3. A spindle drive (100) in accordance with either of claims 1 or 2, **characterized in that** at least one activation element, preferably an activation ring (40), is provided which is moved in the axial direction of the spindle by the axial movement of the second nut (22).

4. A spindle drive (100) in accordance with claim 3, **characterized in that** the activation element is located outside the region surrounded by the first nut (20).

5. A spindle drive (100) in accordance with either of claims 3 or 4, **characterized in that** the activation element is arranged such that it is displaceably arranged on the outer side of the first nut (20) remote from the threaded bolt (10).

6. A spindle drive (100) in accordance with one of the claims 3 to 5, **characterized in that** the activation element extends by means of a bolt (42) through a cut-out in the first nut (20).

7. A spindle drive (100) in accordance with one of the preceding claims, **characterized in that** the sensor unit (30) is arranged in a fixed position.

8. A spindle drive (100) in accordance with claim 7 as well as in accordance with one of the claims 3 to 6, **characterized in that** the at least one element is the activation element.

9. A spindle drive (100) in accordance with one of the preceding claims, **characterized in that** the first nut (20) is connected to the second nut (22) such that the two nuts (20, 22) are not rotatable relative to one another.

10. A spindle drive (100) in accordance with claim 9, **characterized in that** one or more pins (50) or the like are provided which connect the two nuts (20, 22) rotationally fixedly to one another.

11. A spindle drive (100) in accordance with one of the preceding claims, **characterized in that** the threaded bolt (10) has an operating region (110) in which, during the usual operation of the spindle drive (100), a relative movement takes place between the threaded bolt (10) and the first nut (20); and **in that** the second nut (22) is arranged such that it is located at least partly outside the operating region (110) when the spindle drive (100) is located in one of its end positions.

12. A spindle drive (100) in accordance with one of the preceding claims, **characterized in that** the spindle drive (100) is connected to a component whose position is to be changed, such as a flap, a rudder or the like of an aircraft, in particular of an airplane.

13. An aircraft having at least one spindle drive (100) in accordance with one of the claims 1 to 12.

## Revendications

1. Entraînement à broche (100) ayant un premier chemin de charge qui comprend un premier écrou (20) qui coopère avec une tige filetée (10) et ayant également un deuxième chemin de charge qui comprend un deuxième écrou (22) qui coopère également avec la tige filetée (10) et qui est agencé de telle sorte que dans au moins une situation de l'entraînement à broche (100), il est mobile dans le sens axial de la tige filetée (10) par rapport au premier écrou (20), où l'entraînement à broche (100) présente une unité de capteur (30) qui est réalisée de telle sorte qu'elle détecte un mouvement relatif entre le premier écrou (20) et le deuxième écrou (22) et qu'elle détecte le mouvement d'un piston (60) ou d'un dispositif similaire, le piston (60) étant agencé de telle sorte qu'il est mis en mouvement lors d'un mouvement relatif entre le premier écrou (20) et le deuxième écrou (22),
**caractérisé en ce que** dans la situation de fonctionnement normale, le piston est agencé dans une rainure d'un élément en liaison avec le deuxième écrou (22), et en cas de défaillance, il est mis en mouvement dans le sens radial par rapport au deuxième écrou (22) et **en ce que** l'unité de capteur (30) comprend un LVDT (Linear Variable Displacement Transducer, capteur de déplacement à variation linéaire) qui est activé par le piston (60) et qui détecte sa position qui est mis en mouvement en fonction de la position relative du premier écrou (20) et du deuxième écrou (22).

2. Entraînement à broche (100) selon la revendication 1, **caractérisé en ce que** le deuxième écrou (22) est agencé au moins en partie ou entièrement dans la zone délimitée par le premier écrou (20).

3. Entraînement à broche (100) selon la revendication 1 ou 2, **caractérisé en ce qu'**il est prévu au moins un élément d'activation, de préférence une douille d'activation (40), qui est mis en mouvement dans le sens axial de la broche par le mouvement axial du deuxième écrou (22).

4. Entraînement à broche (100) selon la revendication 3, **caractérisé en ce que** l'élément d'activation se trouve en dehors de la zone délimitée par le premier écrou (20).

5. Entraînement à broche (100) selon la revendication 3 ou 4, **caractérisé en ce que** l'élément d'activation est agencé de telle sorte qu'il est agencé de façon à pouvoir être déplacé sur le côté extérieur du premier écrou (20) situé en opposition à la tige filetée (10).

6. Entraînement à broche (100) selon l'une quelconque des revendications 3 à 5, **caractérisé en ce que** l'élément d'activation s'étend à travers un évidement dans le premier écrou (20) au moyen d'un boulon (42).

7. Entraînement à broche (100) selon l'une quelconque des revendications précédentes, **caractérisé en ce que** l'unité de capteur (30) est agencée dans une position fixe.

8. Entraînement à broche (100) selon la revendication 7 et selon l'une quelconque des revendications 3 à 6, **caractérisé en ce que** l'au moins un élément est l'élément d' activation.

9. Entraînement à broche (100) selon l'une quelconque des revendications précédentes, **caractérisé en ce que** le premier écrou (20) est en liaison avec le deuxième écrou (22) de telle sorte que les deux écrous (20, 22) ne peuvent pas être mis en rotation l'un par rapport à l'autre.

10. Entraînement à broche (100) selon la revendication 9, **caractérisé en ce qu'**il est prévu une ou plusieurs goupilles (50) ou dispositifs similaires qui relient les deux écrous (20, 22) l'un à l'autre de façon à ce qu'ils ne puissent pas tourner.

11. Entraînement à broche (100) selon l'une quelconque des revendications précédentes, **caractérisé en ce que** la tige filetée (10) présente une zone de fonctionnement (110) dans laquelle un mouvement relatif se produit entre la tige filetée (10) et le premier écrou (20) pendant le fonctionnement habituel de l'entraînement à broche (100) et **en ce que** le deuxième écrou (22) est agencé de telle sorte qu'il se trouve au moins partiellement en dehors de la zone de fonctionnement (110) lorsque l'entraînement à broche (100) se trouve dans une de ses positions d'extrémités.

12. Entraînement à broche (100) selon l'une quelconque des revendications précédentes, **caractérisé en ce que** l'entraînement à broche (100) est en liaison avec un composant dont la position doit être modifiée, comme par exemple un volet, une gouverne ou un dispositif similaire d'un aéronef, en particulier d'un avion.

13. Aéronef comprenant au moins un entraînement à broche (100) selon l'une quelconque des revendications 1 à 12.
